(19) Europäisches Patentamt / European Patent Office / Office européen des brevets

(11) **EP 1 774 272 B1**

(12) **FASCICULE DE BREVET EUROPEEN**

(45) Date de publication et mention
de la délivrance du brevet:
**05.09.2012 Bulletin 2012/36**

(21) Numéro de dépôt: **05789929.6**

(22) Date de dépôt: **11.07.2005**

(51) Int Cl.:
*G01L 3/10* (2006.01)     *G01L 5/22* (2006.01)

(86) Numéro de dépôt international:
**PCT/FR2005/050571**

(87) Numéro de publication internationale:
**WO 2006/008425 (26.01.2006 Gazette 2006/04)**

(54) **CAPTEUR DE POSITION, NOTAMMENT DESTINE A LA MESURE DE LA TORSION D'UNE COLONNE DE DIRECTION**

POSITIONSSENSOR, INSBESONDERE ZUR MESSUNG VON LENKRADDREHUNGEN

POSITION SENSOR WHICH IS INTENDED, IN PARTICULAR, FOR MEASURING STEERING COLUMN TORSION

(84) Etats contractants désignés:
**CH DE FR IT LI**

(30) Priorité: **09.07.2004 FR 0407718**

(43) Date de publication de la demande:
**18.04.2007 Bulletin 2007/16**

(73) Titulaire: **Moving Magnet Technologies
25000 Besançon (FR)**

(72) Inventeurs:
• **PRUDHAM, Daniel
F-25220 THISE (FR)**
• **MASSON, Gérald
F-25000 BESANCON (FR)**
• **FOUCAUT, Antoine
F-70190 MONTARLOT-LES-RIOZ (FR)**

(74) Mandataire: **Breesé, Pierre
Fidal Innovation
32, place Ronde
92035 Paris la Defense cedex (FR)**

(56) Documents cités:
**DE-U1- 20 305 732       GB-A- 2 379 277
US-A1- 2004 074 314**

**Description**

La présente invention concerne le domaine des capteurs de position, et plus particulièrement les capteurs de position destinés à la mesure de la torsion d'une colonne de direction, sans que cette application ne soit exclusive.

On connaît dans l'état de la technique le brevet américain US4984474 décrivant un capteur de l'état de la technique, présentant une partie statorique constituée par une pièce ferromagnétique formant des dents radiales, sur deux étages, placées en regard d'aimants multipolaires aimantés radialement en sens alternés.

Une pièce ferromagnétique additionnelle est placée en regard de la partie statorique, et présente un entrefer dans lequel est disposée une sonde de Hall.

Cette solution de l'art antérieur n'est pas satisfaisante car elle conduit à une perte de signal magnétique entre la partie statorique et la partie comprenant la sonde de Hall. Par ailleurs, le champ magnétique généré par les aimants donne lieu à des pertes dues à la structure du capteur.

On connaît également dans l'état de la technique un capteur décrit dans le brevet français FR 2824910 décrivant un autre capteur de position, constitué par une partie présentant une pluralité d'aimants, coopérant avec les dents orientés axialement d'une partie statorique composé de deux culasses de forme annulaire.

Cette structure conduit à des problèmes de non linéarité du signal de sortie du fait de la forme des dents de stators qui se terminent en pointe.

Enfin on connaît dans l'état de la technique le brevet international WO 02/071019.

Cette solution, qui est plus satisfaisante que les précédentes du fait de sa structure optimisée, permet d'obtenir un rapport signal sur bruit convenable pour effectuer une mesure fiable.

Néanmoins, afin de garantir un bon fonctionnement du capteur, c'est-à-dire peu sensible aux variations géométriques ou dimensionnelles des pièces qui le constituent, il est nécessaire d'augmenter les entrefers mis en jeu dans le circuit magnétique.

Dès lors que ces entrefers permettent d'accepter les dispersions inhérentes à une fabrication des pièces en série, la sensibilité du capteur, définie par le rapport du signal de sortie sur l'angle mesuré, diminue sensiblement et ne permet plus d'effectuer des mesures fiables sur les petites courses (inférieures à +/-6°).

Ainsi cette quatrième solution, sans autres précautions de dimensionnement que celles décrites dans le texte de brevet WO 02/071019, ne permet pas d'obtenir un signal suffisant pour répondre à tous les besoins en matière de mesure de couple sur arbre de torsion, sachant que les courses se situent généralement entre +/-3° et +/-8°.

Enfin, si l'on s'en tient à la description des structures du capteur, telles que décrites dans les brevets précités, le niveau d'induction dans les dents de stator est élevé de sorte qu'il est nécessaire d'utiliser une épaisseur de dent importante, c'est-à-dire comprise entre 1.5 et 2 mm, afin d'éviter le saturation magnétique du matériau.

Or il apparaît que l'épaisseur de tôle utilisée pour réaliser la partie statorique est un paramètre important dans la conception du capteur. En effet elle détermine les fuites qui apparaissent entre les flancs des dents de stators.

Ainsi, nos travaux ont permis de montrer que la réduction de cette épaisseur réduit également ces fuites, ce qui se traduit par une augmentation de la sensibilité du capteur.

Comme il a déjà été expliqué plus haut, cette sensibilité fait défaut sur les capteurs de faibles courses et il est donc très important de pouvoir réduire cette épaisseur de dent pour assurer une sensibilité suffisante permettant au capteur de fonctionner sur des courses faibles.

On comprend donc que les solutions existantes sont limitées, d'un côté par un manque de sensibilité, pénalisant pour les courses faibles, et d'un autre côté par l'impossibilité de réduire les épaisseurs de dent du fait d'un niveau d'induction élevé.

Outre l'aspect technique de ce critère d'épaisseur de dent, il est également important de noter que le fait de réaliser les capteurs avec des dents massives, induit une augmentation importante du coût de fabrication du capteur.

En effet, les matériaux possédant les qualités nécessaires à la fabrication de ces pièces magnétiques sont relativement chers ; ainsi le coût matière peut représenter 40 à 60 pourcent du coût total de fabrication de ces pièces.

La réduction du volume de matière utilisé est donc primordiale dans la recherche de réduction des coûts.

Sachant que ces capteurs d'angle visent principalement le domaine automobile et que le coût de fabrication est d'importance capitale dans ce domaine, il apparaît que ce critère d'épaisseur des pièces magnétiques, peut conduire à une incompatibilité avec le marché visé de la mesure de couple sur colonne de direction.

Il est également connu de l'état de la technique lesdocuments DE 203 05 732, US 2004/074314 et GB 2 379 277 décrivant des capteurs de position magnétique selon le préambule de la revendication 1. Dans ce type de capteur magnétique, les secteurs angulaires de collection sont fixes alors que les stators sont mobiles en rotation et peuvent donc présenter un fond rond qui se traduira par un décalage radial entre les deux structures.

La présente invention a pour but de remédier à ce problème en proposant une solution selon la partie caractérisante de la revendication 1.

Afin de garantir l'insensibilité du capteur à ce défaut d'excentration, les secteurs angulaires de collections doivent être prévus aptes à collecter un flux axial constant en dépit d'un décalage radial éventuel entre les deux structures statorique et collectrice.

Ceci est possible à condition que la perméance, c'est-à-dire la grandeur physique qui représente la facilité avec laquelle le flux peut traverser cet entrefer stator collecteur, soit indépendante de la position radiale relative des deux structures.

La perméance relative à un entrefer entre deux pièces ferromagnétiques est définie par la relation suivante :

$$\Lambda = \frac{\mu \times S}{\lambda}$$

où :

μ Désigne une constante caractéristique du matériau constituant l'entrefer et appelée permittivité magnétique.
S Désigne l'aire de la surface sur laquelle les deux pièces sont en regard.
l Désigne la distance entre les deux surfaces en regard constituant l'entrefer.

Sachant que la distance entrefer n'est pas affectée par le décalage radial des deux structures statorique et collectrice, il suffit de garantir une surface en vis-à-vis constante pour conserver une perméance fixe.

Dans ce texte, nous revendiquons une forme particulière donnée aux couronnes de stators (23, 24) et aux secteurs angulaires de collection (33, 34), qui permet d'obtenir un recouvrement de l'une des parties sur l'autre, afin de rendre le capteur insensible au décalage radial entre les structures statorique (20) et collectrices (30).

Comme il sera expliqué plus en détail dans les paragraphes suivants, les secteurs angulaires pourront être dimensionnés avec une largeur radiale de disque plus faible que celle des couronnes de stators et inversement lorsque les stators font apparaître une couronne de collection bien délimitée, les secteurs angulaires seront prévus aptes à recouvrir ces dernières couronnes de stators.

En outre, la présente invention a pour but de remédier aux deux principaux problèmes identifiés sur les structures existantes que sont d'une part la faible sensibilité du capteur et d'autre part l'utilisation de pièces massives et donc chères.

Pour cela le nouveau capteur se compose de trois structures magnétiques distinctes : une première structure rotorique comprenant une pluralité d'aimant fixés sur une culasse ; une seconde structure magnétique statorique comprenant deux couronnes présentant une pluralité de dents axiales imbriquées ; et une troisième structure collectrice fixe constituée de deux portions de disque prolongées de branches coudées se refermant pour former un entrefer de mesure où est placé un élément magnéto sensible.

La rotation relative des deux premières structures génère une variation de flux, dans l'entrefer créé au niveau de la troisième structure collectrice.

La structure statorique se caractérise par un dimensionnement précis de la géométrie des dents de stator.

Cette règle de dimensionnement permet d'atteindre des meilleures performances en termes de niveau de signal, de linéarité, de sensibilité aux défauts géométriques et dimensionnels, grâce à la réduction de l'épaisseur des pièces magnétiques.

Les différents critères géométriques, faisant l'objet de la présente invention, vont être énoncés dans les paragraphes suivants.

Une analyse par simulation 3D de la configuration magnétique telle que définie dans le brevet WO 02/071019 fait apparaître un flux de fuite important entre l'extrémité des dents d'un stator et la couronne de l'autre stator.

Ainsi, il a été montré que la longueur des dents de stators est un paramètre très important pour la régulation des flux dans ce type de structure magnétique.

En effet, la longueur d'imbrication des dents doit être limitée sans quoi des flux de fuites apparaissent en bout de dent et induisent un niveau d'induction élevé, qui oblige à conserver une épaisseur de dent importante, laquelle induit à son tour des fuites entre les flancs des dents.

On notera que la largeur des dents de stators est également importante pour garantir une bonne linéarité du capteur. Cette largeur peut être définie par un angle qui doit être supérieur à la course visée pour le capteur.

De plus, il est intéressant de donner une forme trapézoïdale à ces dents de façon à augmenter la section disponible au passage du flux lorsque l'on se rapproche du coude de dent, puisque c'est à ce niveau que le flux est maximal.

Ajoutons que la surface active de la dent, c'est-à-dire la surface en regard de l'aimant, détermine la quantité de flux collecté et donc la sensibilité du capteur.

Cette dernière surface devra donc être choisie la plus grande possible tout en restant compatible avec les autres paramètres.

En fin de compte, nous pouvons donc établir que l'optimisation de la structure statorique passe par la minimisation des surfaces en vis-à-vis sur les flancs de dents de stators opposés pour limiter les fuites et par la maximisation des surfaces de dent en regard de l'aimant.

Ainsi, la règle de dimensionnement régissant le dimensionnement des stators peut être exprimée au travers d'un rapport des surfaces énoncées ci-dessus et défini par:

$$\frac{\text{Hauteur dents} \times \text{Largeur moyenne dents}}{\text{Hauteur imbrication des dents} \times \text{epaisseur dent}} \rangle \ 5$$

où la largeur moyenne des dents est définie comme étant la valeur moyenne des longueurs des arcs formés à l'extrémité et à la base des dents.

Au regard des figures 2a et 2c du brevet français FR 2824910, il est possible d'évaluer grossièrement le critère géométrique ci-dessus et la valeur obtenue est comprise entre deux et trois. De même pour le brevet américain US4984474 cette valeur est comprise entre un et deux.

Pour les autres brevets connus, l'architecture du capteur est fondamentalement différente et ne permet pas d'évaluer ce critère.

En plus de ce dimensionnement de la géométrie des stators, la longueur de l'aimant doit être également optimisée par rapport à la hauteur globale du capteur.

En effet, il apparaît que la sensibilité du capteur comparée au volume d'aimant atteint un optimum lorsque la longueur d'aimant correspond sensiblement à la longueur de dent, laquelle est définie par la règle énoncée ci avant.

Lorsque ces règles sont appliquées, les flux de fuites entre dents sont limités et le niveau d'induction dans la dent est d'autant diminué. Il est alors possible de réduire l'épaisseur des dents, ce qui conduit à une meilleure sensibilité du capteur.

A titre indicatif, les spécifications géométriques précédentes permettent de diviser les épaisseurs de dents par un facteur deux ou plus par rapport aux épaisseurs requises sur les configurations basiques telles que décrites dans l'art antérieur.

Hormis les critères précédents, relatifs à la géométrie des stators, les choix faits sur la configuration de la structure collectrice du capteur peuvent également apporter un gain sur la sensibilité du capteur et participer à la réduction des coûts.

Ainsi le capteur, selon l'invention, met en jeu des collecteurs qui se présentent comme des secteurs angulaires de disques fins, qui permettent une collection axiale du flux et qui font apparaître un coude bien marqué entre la surface d'échange de flux avec le stator et l'autre extrémité de la branche qui définit l'entrefer de mesure.

Cette configuration permet la réalisation de collecteurs de faible épaisseur, ce qui présente l'avantage de limiter les fuites apparaissant sur les tranches des branches de conduction du flux dans l'entrefer et permet ainsi d'augmenter la sensibilité du capteur.

Nous pouvons alors définir un second critère géométrique comme étant le rapport de l'entrefer de mesure par la distance axiale inter stators.

La nouvelle structure collectrice (30) telle que décrite dans ce brevet présente un entrefer de mesure petit comparé à la distance qui sépare les deux couronnes de stator et se caractérise par l'égalité suivante :

$$\frac{\text{Distance Inter Stators}}{\text{Hauteur Entrefer}} \geq 4$$

On notera qu'aucun brevet de l'art antérieur ne décrit une telle structure collectrice axiale présentant cette caractéristique dimensionnelle.

Par ailleurs, la possibilité d'utiliser des collecteurs de faibles épaisseurs, autorise, dans notre cas, la réalisation des deux stators et des deux collecteurs dans une seule et même bande de matière.

Cette particularité permet, encore une fois, de réduire les coûts de fabrication des pièces magnétiques en limitant les chutes de matière par un arrangement judicieux des découpes dans la bande.

Suivant les différentes descriptions de l'art antérieur, ces pièces de collection peuvent présenter différentes formes ou position à l'égard des stators. Ils sont décrits comme se situant à l'intérieur des stators ou tout simplement à leur voisinage suivant les brevets existants.

Au-delà de la forme générale à donner aux collecteurs, nous proposons dans ce texte une solution nouvelle concernant la position des secteurs angulaires de collection par rapport aux stators, qui permet d'augmenter nettement la sensibilité du capteur.

Il s'agit de placer les collecteurs à l'extérieur des stators, de façon à les éloigner le plus possible l'un de l'autre en restant en regard des disques de stators.

En effet, compte tenu des flux de fuites qui circulent entre les deux collecteurs, sans passer par l'entrefer de mesure, ce type de collection conduit à une amélioration de la sensibilité du capteur et participe à la définition du capteur optimisé revendiqué dans le présent brevet.

Par ailleurs, pour des raisons de fiabilité du capteur de couple, il peut être intéressant de prévoir deux éléments magnéto sensibles pour permettre une redondance de la mesure en cas de défaut sur l'une des sondes.

Dans ce but, les collecteurs de flux peuvent présenter deux branches distinctes, permettant de créer deux entrefers de mesure en parallèle, dans lesquels sont placés les deux éléments magnéto sensibles séparés.

Sachant qu'il existe aujourd'hui des composants électroniques plus évolués, contenant deux éléments magnéto sensibles dans un seul circuit intégré, il est intéressant d'utiliser des collecteurs présentant chacun une seule branche de façon à bénéficier de la redondance de mesure tout en limitant la surface de l'entrefer de mesure.

En effet, la réduction de la surface en regard sur les deux collecteurs augmente le niveau de signal et donc la sensibilité du capteur.

Les différentes spécificités du capteur d'angle optimisé apparaîtront de façon plus claire au travers de la description des figures suivantes :

- les figures 1 et 2 sont des vues en perspective faisant apparaître la nouvelle structure collectrice du capteur,

- les figures 3 et 4 sont respectivement une vue à plat et une vue en perspective faisant apparaître les critères géométriques revendiqués sur la partie statorique,

- les figures 5, 6 et 7 représentent un premier mode de réalisation du capteur,

- les figures 8 et 9 représentent un second mode de réalisation de la solution proposée,

- les figures 10 et 11 sont des vues en perspective présentant un mode de réalisation particulier de la structure collectrice et basée sur une collection extérieure aux stators,

- les figures 12 et 13 représentent une variante de la solution présentée en figures 10 et 11,

- les figures 14, 15 et 16 sont respectivement une vue en perspective, une vue en perspective coupée et une vue de dessus, présentant une forme particulière opérée sur les stators et les collecteurs au niveau des surfaces d'échange de flux,

- les figures 17 et 18 présentent un mode de réalisation, dans lequel les dents de stators sont raccourcies au maximum de façon que l'imbrication des dents soit nulle.

- Les figures 19 et 20 présentent un mode de réalisation de la partie collectrice.

Description des figures :

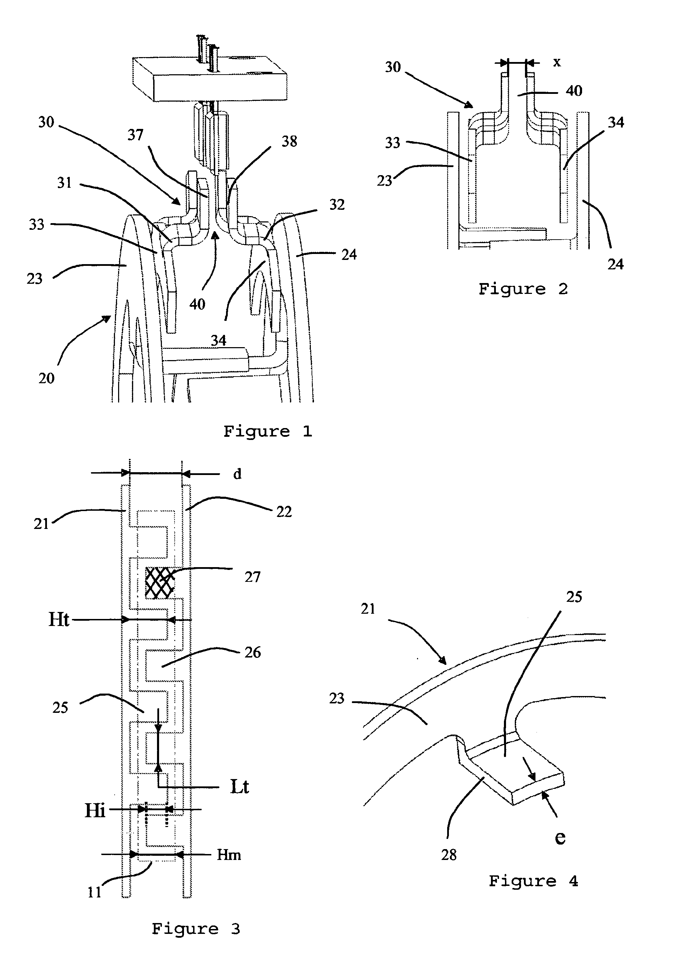

Les figures 1 et 2 sont des vues qui représentent la troisième structure magnétique du capteur. Il s'agit de la structure collectrice (30) fixe qui permet de collecter le flux sur les couronnes de stators (23, 24) et de le concentrer dans l'entrefer de mesure (40).

Cette structure est constituée de deux pièces (31, 32) formées chacune d'une portion angulaire de disque (33, 34), qui est conçue apte à opérer un échange de flux entre stators et collecteurs dans la direction axiale du capteur.

Les collecteurs (31, 32) possèdent des secteurs angulaires (33, 34) dont la largeur radiale est plus petite que celle des couronnes de stators (23, 24) et permettent de tolérer un défaut d'excentricité entre la structure statorique (20) et la structure collectrice (30).

Les pièces collectrices (31, 32) présentent un décalage important entre les portions de disque (33, 34) et les facettes (37, 38) constituant l'entrefer de mesure (40).

Cette particularité permet de limiter les fuites entre les parties collectrices (33, 34) de flux qui restent éloignées, et de conserver un entrefer (40) de largeur (x) réduite pour concentrer au maximum le flux et accroître la sensibilité du capteur.

Au final, la structure magnétique de collection se distingue de l'art antérieur par le fait que les secteurs angulaires de collection (33, 34) sont conçus aptes à opérer un transfert de flux axial, qu'ils sont totalement inscrits à l'intérieur des couronnes de stators (23, 24) afin d'offrir une perméance indépendante de la position radiale relative des deux structures (20) et (30), et enfin qu'ils possèdent un coude prononcé générant un décalage sensible entre secteurs angulaires (33, 34) et les faces (37, 38) formant l'entrefer de mesure (40).

La figure 3 est un schéma qui correspond à une vue déroulée à plat de l'aimant (11) ainsi que des deux stators (21, 22) comprenant des dents axiales imbriquées (25, 26).

Ce schéma fait apparaître que les dents ne se prolongent pas jusqu'au second stator et que leur largeur (Lt) est proche de leur longueur (Ht).

Ces spécificités géométriques permettent de réduire les épaisseurs de dents ainsi que celle des collecteurs pour aboutir à un capteur performant et peu coûteux.

La figure 4 associée à la figure 3 montre une vue en perspective d'une dent de stator (25), de façon à faire apparaître l'épaisseur des dents (e) et la surface latérale des dents (28) dont il est question dans les paragraphes suivants.

Dans la configuration telle que représentée par ces deux figures 3 et 4, il apparaît que le rapport de la surface de dent utile (27) en vis-à-vis de l'aimant (11) avec la surface latérale de fuites entre dent (28) est important, il vérifie la relation exprimée dans les chapitres précédents à savoir un ratio supérieur à 5.

On notera que la hauteur Hm de l'aimant (11) est sensiblement égale à la hauteur Ht des dents (25, 26) et donc nettement inférieur à la distance inter stators notée (d).

Cette vue fait apparaître les différents paramètres géométriques à prendre en compte dans le dimensionnement des stators.

On note :

- Ht : la hauteur des dents de stator, de l'extrémité jusqu'à la surface intérieure de la couronne.

- Hi : la hauteur sur laquelle les stators pénètrent l'un dans l'autre ou encore la hauteur d'imbrication des dents.

- Hm : la hauteur de l'aimant suivant son axe.

- Lt : la largeur moyenne de dent calculée comme étant la valeur moyenne des longueurs des arcs formés en extrémité et à la base de la dent.

- e : l'épaisseur des dents dans la direction radiale au stator.

Ces paramètres permettent de définir un rapport entre la surface active et la surface de fuite des dents, rapport qui permet de définir une relation caractérisante du capteur proposé.

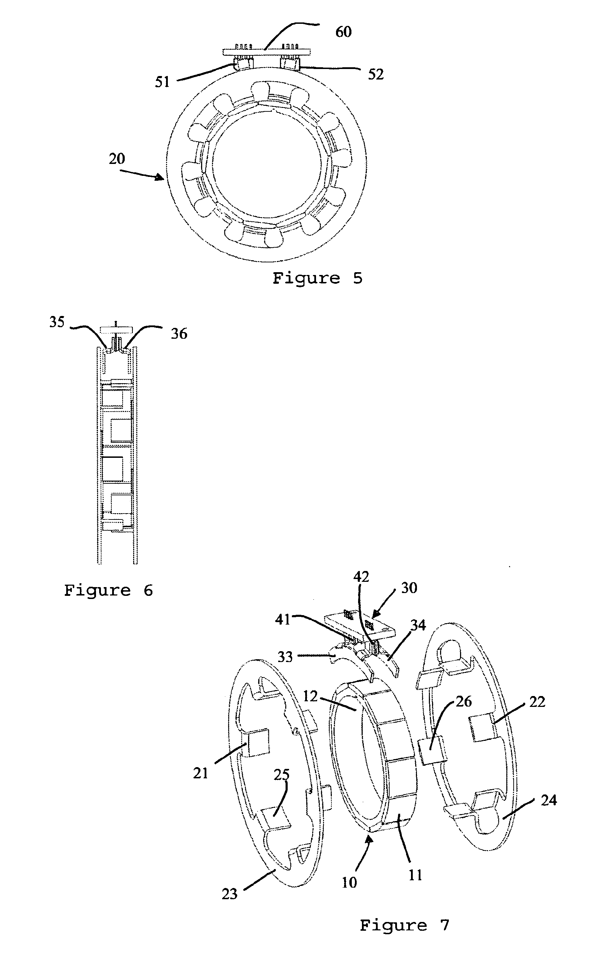

Les figures 5, 6 et 7 sont respectivement des vues de face, de côté et en perspective représentant un premier mode de réalisation du capteur selon l'invention, la partie statorique (20) répond aux règles géométriques précédemment énoncées et la structure collectrice (30) fait apparaître les secteurs angulaires (33, 34) face aux couronnes de stators (23, 24) suivant une direction axiale.

La structure rotorique (10) comporte un aimant (11) à 6 paires de pôles, monté sur une culasse (12), agissant sur deux stators (21, 22) comprenant chacun 6 dents droites (25, 26).

La hauteur d'imbrication des stators (21, 22) est faible devant la longueur des dents (25, 26) et leur largeur est grande devant leur épaisseur. Les critères géométriques relatifs au dimensionnement des stators sont donc respectés.

Cette vue présente également une première solution de collection du flux, basée sur deux secteurs angulaires de disques (33, 34) inscrits dans les couronnes de stators (33, 34), et prolongés de deux branches pliées (35, 36) qui permettent de ramener le flux à l'intérieur de deux entrefers de mesure (41, 42) dans lesquels sont placées deux sondes de Hall (51, 52) soudées sur un circuit imprimé (60), de façon à bénéficier d'une redondance de la mesure.

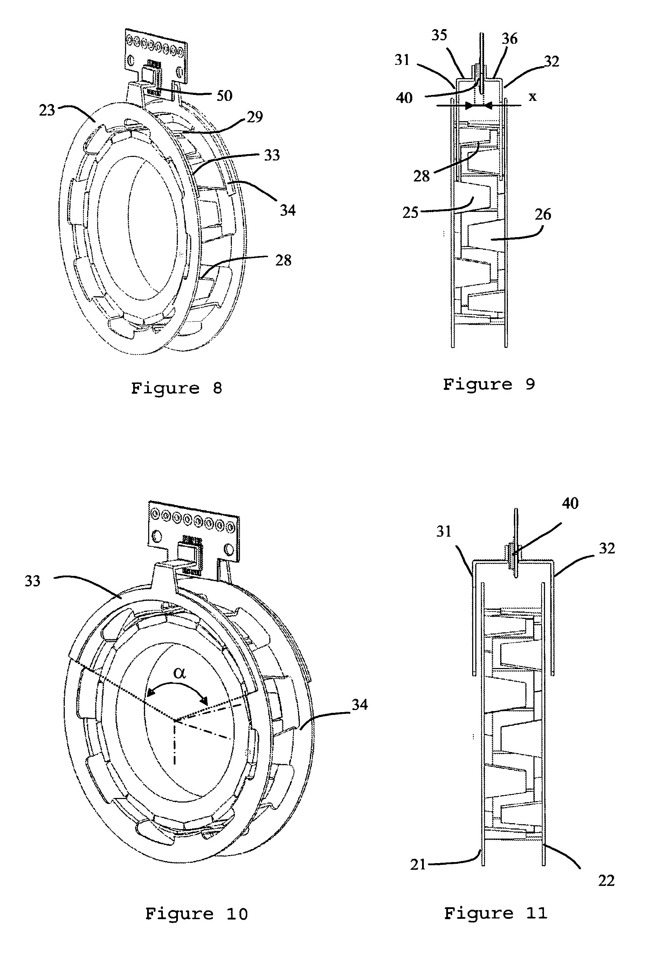

Les figures 8 et 9 représentent un second mode de réalisation de la solution proposée, dans laquelle apparaît une structure à 8 dents, plutôt adaptée aux mesures sur une petite course (+/- 4°).

Les dents (25, 26) sont de forme trapézoïdale de façon à augmenter la section au pied de la dent. Cette forme trapézoïdale est particulièrement intéressante dans le cas de notre design optimisé.

En effet, les épaisseurs de dents étant volontairement très réduites, cet élargissement permet de conserver une section suffisante au passage du flux pour éviter la saturation dans le pied de dent.

De plus, le fait de raccourcir les dents permet de réaliser cet élargissement de la base des dents sans générer de flux de fuites parasites entre les flancs latéraux (28, 29) des dents opposées.

Par ailleurs, l'aimant multipolaire (11) est dimensionné en respectant une hauteur proche de celle des dents (25, 26), offrant alors le meilleur compromis entre la sensibilité du capteur et le volume d'aimant.

Comme dans la figure précédente, les pièces collectrices de flux (31, 32) sont placées à l'intérieur des couronnes de stators (23, 24) et se présentent sous la forme de secteurs circulaires (33, 34) prolongés de branches pliées (35, 36), se refermant pour former un entrefer de mesure (40).

Cette construction diffère de la précédente par le fait que les collecteurs (31, 32), qui ne possèdent chacun qu'une seule branche (35, 36), conduisent le flux dans un entrefer de mesure unique (40), prévu apte à recevoir un seul composant électronique (50) lequel intègre deux éléments magnéto sensibles de façon à conserver la redondance de mesure.

On notera cependant que dans ce cas, la hauteur x de l'entrefer de mesure (40) doit être augmenté car ce dernier doit contenir le composant ainsi que le circuit support. Cette augmentation d'entrefer présente l'inconvénient de diminuer la sensibilité du capteur, mais permet en contrepartie de diminuer les coûts des composants électroniques.

Les figures 10 et 11 font apparaître un mode de réalisation dans lequel les secteurs angulaires (33, 34) des pièces collectrices de flux (31, 32), sont placés à l'extérieur des stators (21, 22).

Cette localisation extérieure permet d'améliorer la sensibilité du capteur en limitant les fuites apparaissant entre les deux portions de disques (33) et (34), pour concentrer davantage le flux dans l'entrefer de mesure (40).

L'angle α indiqué en figure 10, correspond à la largeur angulaire de l'arête intérieure des secteurs de collection (33,34). Cet angle sera préférentiellement choisi comme étant un multiple du pas polaire angulaire de l'aimant.

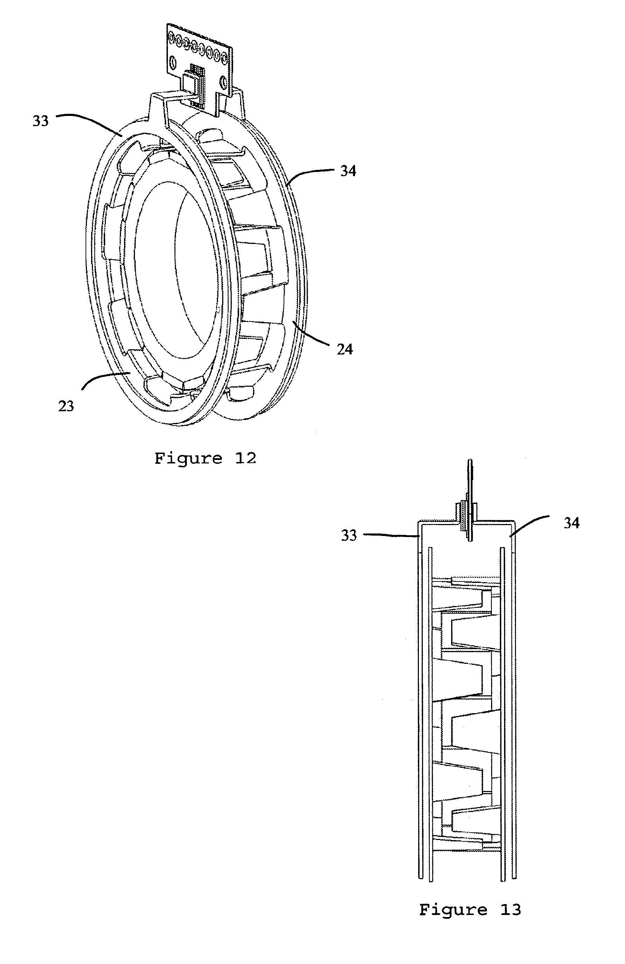

Dans le cas de la solution des figures 10 et 11, la collection est faite sur un secteur angulaire limité alors que les figures 12,13 présentent une solution variante dans laquelle les parties collectrices de flux (33, 34) sont constituées d'un disque complet.

Cette solution présente, d'une part, un gain sur la quantité de flux collecté, ce qui se traduit par un gain de sensibilité du capteur, et d'autre part, un intérêt vis-à-vis de la tolérance du capteur aux défauts de battement axial des stators (23,24), lesquelles peuvent alors être fabriquées avec des tolérances géométriques moins serrées et à moindre coût.

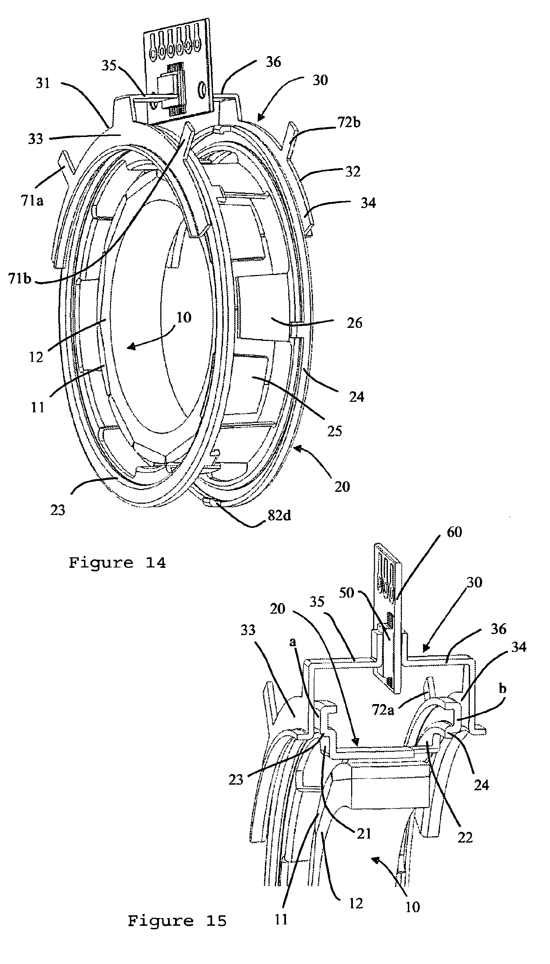

Les figures 14, 15 et 16 sont respectivement une vue en perspective, une vue en perspective coupée et une vue de dessus, montrant un mode de réalisation préféré pour le capteur.

Au travers de ce mode de réalisation particulier, nous allons décrire précisément les formes et les dimensions d'un capteur dimensionné pour réaliser une mesure sur une course de plus ou moins huit degrés d'un arbre de torsion équipant une colonne de direction.

Le capteur se compose toujours des trois structures collectrice (30), statorique (20) et rotorique (10), cette dernière étant composée d'un aimant à 6 paires de pôles (11) de hauteur 7 mm, aimantés radialement pour former une bague de diamètre intérieur 34.8 mm et de diamètre extérieure 37.8 mm, montée sur une culasse cylindrique (12) de même hauteur que l'aimant et de diamètre intérieur 31 mm.

La structure statorique (20) comporte deux stators (21, 22) montés en vis-à-vis et décalés angulairement d'un angle correspondant au pas polaire de l'aimant, à savoir de trente degrés.

Chacun de ces stators est constitué d'une couronne circulaire (23, 24) de diamètre intérieur 39.2 mm et de diamètre extérieur 49 mm prolongée sur sa partie intérieure de 6 dents (25, 26) se présentant comme des portions de cylindre de hauteur 7 mm, orientées axialement de manière à collaborer avec les faces extérieures des aimants constituant la première structure rotorique (10).

Les dents font apparaître une largeur angulaire vue de l'axe du capteur qui est croissante de 23 degrés à l'extrémité, à 26 degrés au niveau du pied, de façon à augmenter la section de passage du flux dans le pied de dent sachant que l'épaisseur de la feuille de tôle utilisée est de 0.6 mm.

On notera également que la largeur angulaire de l'arc intérieur de la dent vue de l'axe du stator est de 23° comparé au 16° de course, ainsi cette géométrie de dent se distingue de l'art antérieur par une largeur importante mais une longueur et une épaisseur faibles.

Les deux stators (21, 22) sont imbriqués sur une distance de 4.25 mm de sorte que la distance inter stator, entre les deux couronnes (23, 34), atteint 9.75 mm.

Dans ce mode de réalisation, les couronnes de stators se distinguent des descriptions précédentes par une forme supplémentaire obtenue par emboutissage dans la direction axiale du capteur.

Les couronnes présentent alors une section en U et bénéficient d'une partie torique plate décalée de 0.8 mm dans la direction opposée à l'aimant.

Ces tores plats (a, b) sont alors aptes à transmettre le flux issu des aimants (11) aux secteurs angulaires (33, 34) qui constituent la structure collectrice (30) et auxquels ils font face à travers un entrefer de 0.7 mm.

L'embouti en forme de U réalisé sur les couronnes de stator a deux intérêts distincts :

D'une part, il fait apparaître les surfaces (a, b) décalées par rapport aux départs de dents, surfaces qui permettent un échange de flux régulier sur le tour avec les collecteurs (31, 32) sans défauts lors du passage des dents.
D'autre part, il permet de rigidifier les couronnes et en particulier les surfaces (a, b) et ainsi il améliore la précision du système de collection.

De plus les secteurs angulaires (33, 34) sont dimensionnés de façon à recouvrir les parties toriques (a, b) des couronnes de collecteurs (23, 24) et ce recouvrement assure l'insensibilité du capteur au faux rond de la partie statorique (20) comme il a été expliqué auparavant.

Bien entendu cette insensibilité au fond rond est vraie en dessous d'une certaine limite de décalage radial des deux structures.

Cette limite est définie par la différence des diamètres intérieur de 44 mm et extérieur de 49 mm des tores (a, b) avec les diamètres intérieur de 43 mm et extérieur de 50 mm des secteurs angulaires (33, 34).
Ce dimensionnement conduit donc à une insensibilité au décalage radial de la structure statorique (20) par rapport à la structure collectrice (30) tant que celui-ci reste inférieur à 0.5 mm au rayon.

Les secteurs angulaires (33, 34) présentent également un emboutissage sur une hauteur de 1 mm, formé axialement dans la direction opposée à l'aimant, et qui rigidifie les collecteurs (31, 32) réalisés dans une tôle d'épaisseur 0.6 mm avec un matériau mou car ayant subit un traitement de recuit magnétique.

Deux branches (35, 36) de largeur 4.5 mm prolongent les secteurs angulaires (33, 34) et permettent de refermer le flux dans un entrefer de mesure (40) de hauteur 1.75 mm situé radialement à l'extérieur des stators (21, 22) et dans lequel un élément magnéto sensible (50) est placé et maintenu par un circuit imprimé (60).

Dans ce cas particulier, la collection est réalisée à l'extérieur des couronnes de stators pour augmenter la sensibilité du capteur, ce qui nécessite un capteur plus haut que dans le cas de la collection intérieure mais permet de gagner environ vingt pour cent sur la sensibilité du capteur.

Compte tenu des emboutis opérés sur les couronnes de stators (33, 34) et de la collection extérieure, la hauteur totale de ce capteur atteint 17 mm, cette côte étant mesurée sur les faces extérieures des plis réalisés sur les secteurs angulaires de collection (33, 34).

Enfin chaque secteur angulaire de collection (33, 34) est pourvu de deux lamelles radiales (71a, 71b) et (72a, 72b) positionnées de part et d'autre des branches de conduction (35, 36), lesquelles lamelles n'ont pas de fonctions magnétiques mais sont utilisées pour la fixation mécanique des pièces de collection dans leur support.

De la même façon, quatre lamelles coudées (81a, 81b, 81c, 81d) et (82a, 82b, 82c, 82d) sont distribuées sur la périphérie de chaque couronne de stators et rabattues vers l'intérieur dans le but de fixer mécaniquement les stators sur une pièce entretoise jouant le rôle de support pour la partie statorique (20).

Pour en revenir à la structure collectrice (30), on notera que les secteurs angulaires s'étendent sur un angle de 135° soit 6 fois 22.5° correspondant au pas polaire du rotor (10) à 8 paires de pôles.

En effet, l'angle de ces secteurs est choisi comme étant un multiple de la largeur angulaire polaire de l'aimant, de façon à ce que lorsqu'un pôle d'aimant s'approche du voisinage des secteurs angulaires de collection (33, 34) un autre pôle d'aimant le fuit.

Ainsi la rotation de la structure rotorique (10) devient invisible par la partie collectrice (30).

Cette singularité permet de réduire les défauts d'ondulation de signal du capteur lorsque les structures rotorique (10) et statorique (20) tournent du même angle, c'est-à-dire lorsqu'il y a rotation de la colonne de direction sans variation de couple.

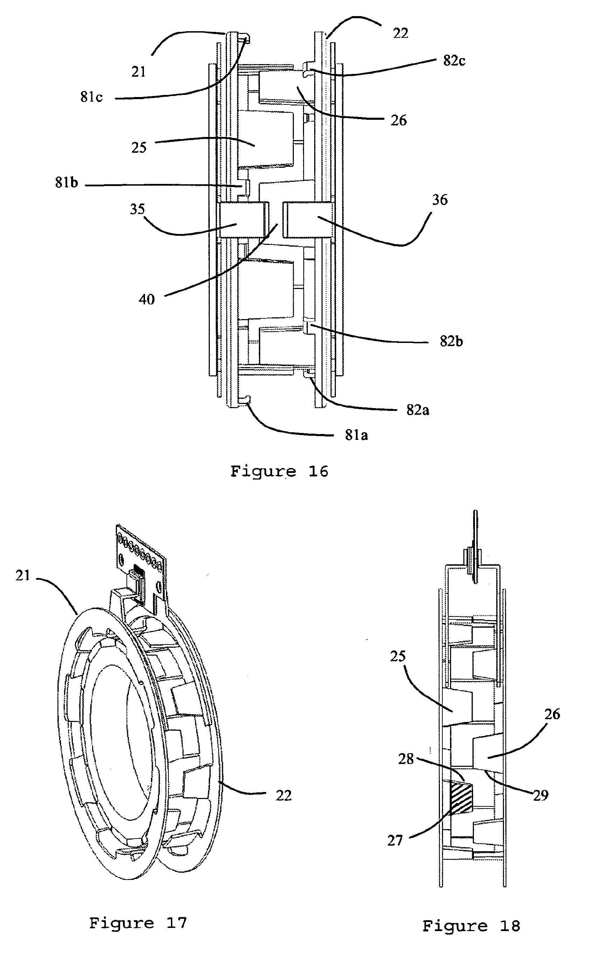

Les figures 17 et 18 représentent un mode de réalisation extrême du capteur dans lequel les dents de stators (25, 26) ont été raccourcies au maximum de façon à ne plus avoir d'imbrication des deux stators (21, 22).

Dans ce cas, les fuites au travers des surfaces latérales (28, 29) des dents sont très faibles ce qui permet de baisser le niveau d'induction dans les dents et améliorer la linéarité du signal. En revanche, la surface des dents de stators en regard de l'aimant (27) étant faible, il est clair que ce type de solution conduit à une sensibilité de capteur limitée.

Néanmoins, dans le cas où la priorité est de garantir une bonne linéarité sans chercher à optimiser le niveau de signal du capteur par rapport au volume d'aimant, cette solution peut présenter un intérêt certain.

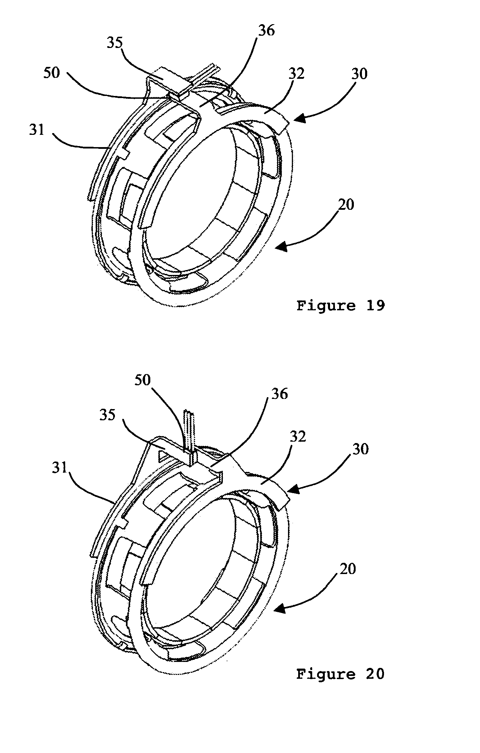

Les figures 19 et 20 montrent des variantes de réalisation de la partie collectrice (30) dans laquelle les branches (35,36) des pièces de fermeture de flux (31,32) sont droites, orientées axialement sans pliures. Ces réalisations permettent une plus grande liberté de positionnement axial du composant électronique (50) qui devient ainsi moins sensible aux erreurs et tolérances mécaniques de positionnement axial.

En figure 19, ces branches (35,36) sont orientées axialement et réalisent un recouvrement radial de l'une sur l'autre par rapport à la structure statorique (20). Le composant électronique (50) doit alors être inséré de manière à ce que les axes de détection des éléments magnétosensibles soient radiaux par rapport à la structure statorique (20). Cette configuration permet une liberté de positionnement axiale plus importante du composant électronique (50).

En figure 20, ces branches (35,36) sont orientées axialement et réalisent un recouvrement tangentiel de l'une sur l'autre par rapport à la structure statorique (20). Le composant électronique (50) doit alors être inséré de manière à ce que les axes de détection des éléments magnétosensibles soient dans des axes parallèles tangents par rapport à la structure statorique (20). Cette configuration permet une liberté de positionnement axiale plus importante du composant électronique (50) et permet de réaliser la partie collectrice (30) dans une pièce découpée d'un diamètre plus petit que dans les autres configurations, ce qui constitue ainsi un gain sur le coût total du capteur.

**Revendications**

1.  Capteur de position, notamment destiné à la détection de la torsion d'une colonne de direction, constitué d'une première structure magnétique rotorique (10) comprenant une pluralité d'aimants orientés radialement, d'une seconde structure statorique (20) comprenant deux couronnes (23, 24) prolongées de dents (25, 26) orientées axialement et imbriquées, et d'une troisième structure collectrice (30) fixe constituée de deux pièces de fermeture de flux (31, 32) qui définissent au moins un entrefer (40) dans lequel est placé au moins un élément magnéto sensible (50), **caractérisé en ce que** les pièces de fermeture de flux (31, 32) et les couronnes de stators (23, 24) définissent entre elles une perméance magnétique indépendante de la position radiale et angulaire relative de ladite seconde structure statorique (20) et de ladite troisième structure collectrice (30).

2.  Capteur de position, selon la revendication 1, **caractérisé en ce que** la structure collectrice (30) comporte deux portions angulaires de disque (33, 34) prévues apte à opérer un transfert de flux axial avec les couronnes de stators (23, 24) et au moins deux branches de fermeture (35, 36) permettant un décalage sensible, entre les faces (33, 34) en regard des couronnes de stators (23, 24), et les faces (37, 38) délimitant l'entrefer de mesure (40), défini par la relation mathématique :

$$\frac{\textbf{Distance InterStators}}{\textbf{Entrefer de mesure}} \geq 4$$

où l'entrefer est défini par la distance minimale entre les faces (37, 38) des collecteurs (31, 32) et où la distance inter stators est définie par la distance entre les faces intérieures des couronnes (23, 24) des stators (21, 22).

3.  Capteur de position, selon la revendication 1 ou 2, **caractérisé en ce que**, les dents des stators (25, 26) respectent les critères géométriques suivants :

$$\frac{\textbf{Ht} \times \textbf{Lt}}{\textbf{Hi} \times \textbf{e}} \geq 5$$

où :

- Ht désigne la hauteur de dents de stators depuis l'extrémité jusqu'à la face intérieure de la couronne.
- Lt désigne la largeur moyenne des dents calculée comme étant la valeur moyenne des longueurs des arcs formés à l'extrémité et à la base de la dent.
- Hi désigne la hauteur d'imbrication des dents de stators c'est-à-dire la hauteur sur laquelle les stators pénètrent l'un dans l'autre.
- e désigne l'épaisseur de la feuille de métal constituant les dents de stators.

4.  Capteur de position, selon l'une quelconque des revendications précédentes, **caractérisé en ce que** la structure de collection de flux (30) est réalisée au moyen de deux secteurs angulaires (33, 34) situés axialement à l'extérieur des couronnes stators (23, 24), qui permettent de conduire le flux jusqu'à un ou plusieurs entrefers de mesure (41, 42) comprenant au moins un élément magnéto sensible (51, 52).

5.  Capteur de position, selon l'une quelconque des revendications précédentes, **caractérisé en ce que** les dents de stators (25, 26) ont une largeur croissante de l'extrémité vers la base.

6.  Capteur de position, selon l'une quelconque des revendications précédentes, **caractérisé en ce que** la structure collectrice (30) est composée de secteurs angulaires (33, 34) dont la largeur angulaire de l'arête intérieure vue de l'axe du capteur, est égale à un multiple du pas polaire angulaire de l'aimant (11).

7.  Capteur de position, selon l'une quelconque des revendications précédentes, **caractérisé en ce que** les pièces de fermeture du flux (31, 32) comportent des secteurs angulaires (33, 34) s'étendant sur 360°.

8. Capteur de position, selon l'une au moins des revendications précédentes, **caractérisé en ce que** l'entrefer de mesure (40) est prévu apte à recevoir un circuit intégré unique (50) comportant deux éléments magnéto sensibles distincts.

9. Capteur de position, selon l'une au moins des revendications précédentes, **caractérisé en ce que** l'aimant (11) possède une hauteur sensiblement égale à celle des dents de stators (25, 26).

10. Capteur de position, selon l'une au moins des revendications précédentes, **caractérisé en ce que** les deux pièces de fermeture du flux (31,32) de la partie collectrice (30) présentent des branches (35,36) droites s'étendant axialement.

11. Capteur de position, selon la revendication précédente, **caractérisé en ce que** les branches (35,36) présentent un recouvrement radial ou tangent de l'une sur l'autre dans lequel est placé au moins un élément magnétosensible (50).

12. Capteur de position selon l'une quelconque des revendications 1 à 11, dans lequel les pièces de fermeture de flux (31,32) et les couronnes du stator (23,24) sont agencées de sorte à obtenir un recouvrement de l'une des parties sur l'autre.

13. Capteur de position selon l'une quelconque des revendications 1 à 12, dans lequel les pièces de fermeture de flux (31,32) sont inscrites à l'intérieur des couronnes du stator (23,24).

**Claims**

1. A position sensor, more particularly intended for detecting the torsion of a steering column, composed of a first rotor magnetic structure (10) including a plurality of radially oriented magnets, of a second stator structure (20) including two rings (23, 24) lengthened by axially oriented interlocking teeth (25, 26), and of a third stationary collector structure (30) composed of two flux closing parts (31, 32) which define at least one air gap (40) wherein is positioned at least one magneto-sensitive element (50) **characterized in that** the flux closing parts (31, 32) and the stator rings (23, 24) define together a magnetic permeance independent of the relative radial and angular position of said second stator structure (20) and of said third collector structure (30).

2. A position sensor according to claim 1, **characterised in that** the collector structure (30) includes tow disk angular portions (33, 34) able to perform an axial flux transfer with the stator rings (23, 24) and at least two closing branches (35, 36) enabling a visible shifting, between the faces (33, 34) opposite the stator rings (23, 24), and the faces (37, 38) delimiting the measuring air gap (40), defined by the following mathematical relationship:

$$\frac{\text{Interstator space}}{\text{Measuring air gap}} \geq 4$$

where the air gap is defined by the minimum distance between the faces (37, 38) of the collectors (31, 32) and where the interstator space is defined by the distance between the inner faces of the stator (21, 22) rings (23, 24).

3. A position sensor according to claim 1 or 2, **characterised in that** the stator teeth (25, 26) comply with the following geometric criteria:

$$\frac{Ht \times Lt}{Hi \times e} \geq 5$$

where:

. Ht is the height of the stator teeth from the end to the inner face of the ring,

. Lt is the average width of the teeth calculated as the average value of the length of the arches formed at the end and at the foot of the tooth,

. Hi is the interlocking height of the stator teeth, i.e. the height whereon the stators are interlocked, and

. e is the thickness of the metal sheet composing the stator teeth.

4. A position sensor according to any one of the preceding claims, **characterized in that** the flux collector structure (30) is provided by two angular sectors (33, 34) positioned axially outside the stator rings (23, 24), which make it possible to lead the flux up to one or several measuring air gap(s) (41, 42) including at least one magneto-sensitive element (51, 52).

5. A position sensor according to any one of the preceding claims, **characterized in that** the stator teeth (25, 26) have an increasing width from the end to the foot.

6. A position sensor according to any one of the preceding claims, **characterized in that** the collector structure (30) is composed of angular sectors (33, 34) wherein the angular width of the inner edge, as seen from the sensor axis, is equal to a multiple of the angular pole pitch of the magnet (11).

7. A position sensor according to any one of the preceding claims, **characterized in that** the flux closing parts (31, 32) include angular sectors (33, 34) extending over 360°.

8. A position sensor according to at least one of the preceding claims, **characterized in that** the measuring air gap (40) is able to receive a single integrated circuit (50) including two distinct magneto-sensitive elements.

9. A position sensor according to at least one of the preceding claims, **characterized in that** the magnet (11) has a height substantially equal to that of the stator teeth (25, 26).

10. A position sensor according to at least one of the preceding claims, **characterized in that** the two flux closing parts (31, 32) of the collector structure (30) have axially extending straight branches (35, 36).

11. A position sensor according to the preceding claim, **characterized in that** the branches (35, 36) show a radial or tangent overlapping of one branch over the other one, wherein at least one magneto-sensitive element (50) is positioned.

12. A position sensor according to any one of claims 1 to 11, wherein the flux closing parts (31, 32) and the stator rings (23, 24) are so arranged as to reach the overlapping of one of the parts with the other one.

13. A position sensor according to any one of claims 1 to 12, wherein the flux closing parts (31, 32) are inscribed within the stator rings (23, 24).

**Patentansprüche**

1. Positionssensor, insbesondere für die Erfassung der Torsion einer Lenksäule, bestehend aus einer ersten rotorartigen Magnetstruktur (10), die eine Mehrzahl von radial ausgerichteten Magneten umfasst, einer zweiten statorartigen Struktur (20), die zwei mit Zähnen (25, 26) verlängerte, axial ausgerichtete und ineinander eingreifende Kränze (23, 24) umfasst, und einer dritten Sammelstruktur (30), die ortsfest ist und aus zwei Flussverschlussteilen (31, 32) besteht, die mindestens einen Luftspalt (40) definieren, in dem mindestens ein magnetisch sensibles Element (50) angeordnet ist, **dadurch gekennzeichnet, dass** die Flussverschlussteile (31, 32) und die Statorkränze (23, 24) miteinander eine magnetische Durchlässigkeit definieren, die unabhängig ist von der radialen und relativen Winkelposition der genannten zweiten statorartigen Struktur (20) und der genannten dritten Sammelstruktur (30).

2. Positionssensor gemäß Anspruch 1, **dadurch gekennzeichnet, dass** die Sammelstruktur (30) zwei winkelförmige Scheibenabschnitte (33, 34) umfasst, die vorgesehen sind, um einen axialen Flusstransfer mit den Statorkränzen (23, 24) vorzunehmen, und mindestens zwei Verschlusszweige (35, 36), die eine fühlbare Verschiebung ermöglicht zwischen den Seiten (33, 34), die den Statorkränzen (23, 24) gegenüberliegen, und den Seiten (37, 38), die den Messluftspalt (40) begrenzen, definiert durch die mathematische Beziehung:

$$\text{Distanz zwischen Statoren} \geq 4$$

$$\text{Messluftspalt}$$

wobei der Luftspalt definiert wird durch die Mindestdistanz zwischen den Seiten (37, 38) der Sammler (31, 32), und wobei die Distanz zwischen Statoren definiert wird durch die Distanz zwischen den Innenseiten der Kränze (23, 24) der Statoren (21, 22).

3. Positionssensor gemäß Anspruch 1 oder 2, **dadurch gekennzeichnet, dass** die Statorzähne (25, 26) die folgenden geometrischen Kriterien erfüllen:

$$\frac{\text{Ht} \times \text{Lt}}{\text{Hi} \times \text{e}} \geq 5$$

wobei:

. Ht die Höhe der Zähne der Statoren bezeichnet, ab dem Ende bis zur Innenseite des Kranzes,
. Lt die mittlere Breite der Zähne bezeichnet, berechnet als Mittelwert der Längen der Bögen, die am Ende und an der Basis des Zahns ausgebildet sind,
. Hi die Verschachtelungshöhe der Statoren bezeichnet, d.h. die Höhe, über die die Statoren ineinander eingreifen,
. e die Dicke der Metallfolie bezeichnet, aus der die Statorzähne gebildet sind.

4. Positionssensor gemäß einem der vorangehenden Ansprüche, **dadurch gekennzeichnet, dass** die Flusssammerstruktur (30) hergestellt wird durch zwei winkelförmige Abschnitte (33, 34), die axial außerhalb der Statorkränze (23, 24) sitzen und ermöglichen, den Fluss bis zu einem oder mehreren Messluftspalte (42, 42) zu leiten, mit mindestens einem magnetisch sensiblen Element (51, 52).

5. Positionssensor gemäß einem der vorangehenden Ansprüche, **dadurch gekennzeichnet, dass** die Statorzähne (25, 26) eine vom Ende zur Basis hin zunehmende Breite aufweisen.

6. Positionssensor gemäß einem der vorangehenden Ansprüche, **dadurch gekennzeichnet, dass** die Sammelstruktur (30) aus winkelförmigen Abschnitten (33, 34) besteht, deren Winkelbreite der Innenkante, von der Sensorenachse aus gesehen, einem Vielfachen des polaren Teilungswinkels des Magneten (11) entspricht.

7. Positionssensor gemäß einem der vorangehenden Ansprüche, **dadurch gekennzeichnet, dass** die Flussverschlussteile (31, 32) winkelförmige Abschnitte (33, 34) umfassen, die sich über 360° erstrecken.

8. Positionssensor gemäß mindestens einem der vorangehenden Ansprüche, **dadurch gekennzeichnet, dass** der Messluftspalt (40) vorgesehen ist, um eine einzige gedruckte Schaltung (50) aufzunehmen, die zwei verschiedene magnetisch sensible Elemente umfasst.

9. Positionssensor gemäß mindestens einem der vorangehenden Ansprüche, **dadurch gekennzeichnet, dass** der Magnet (11) eine Höhe aufweist, die in etwa derjenigen der Statorzähne (25, 26) entspricht.

10. Positionssensor gemäß mindestens einem der vorangehenden Ansprüche, **dadurch gekennzeichnet, dass** die beiden Flussverschlussteile (31, 32) des Sammelteils (30) sich axial erstreckende gerade Zweige (35, 36) aufweisen.

11. Positionssensor gemäß dem vorangehenden Anspruch, **dadurch gekennzeichnet, dass** die Zweige (35, 36) eine radiale Überschneidung aufweisen oder übereinander tangieren, wobei mindestens ein magnetisch sensibles Element (50) angeordnet ist.

12. Positionssensor gemäß einem der Ansprüche 1 bis 11, bei dem die Flussverschlussteile (31, 32) und die Statorkränze (23, 24) angeordnet sind, um eine Überschneidung eines der Teile über das andere zu erhalten.

13. Positionssensor gemäß einem der Ansprüche 1 bis 12, bei dem die Flussverschlussteile (31, 32) innerhalb der Statorkränze (23, 24) sitzen.

Figure 1

Figure 2

Figure 3

Figure 4

14

Figure 5

Figure 6

Figure 7

Figure 8

Figure 9

Figure 10

Figure 11

Figure 12

Figure 13

Figure 14

Figure 15

18

Figure 16

Figure 17

Figure 18

Figure 19

Figure 20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4984474 A
- FR 2824910
- WO 02071019 A
- DE 20305732
- US 2004074314 A
- GB 2379277 A